# FASCICULE DE BREVET EUROPEEN

(11) **EP 0 392 926 B1**
(45) Date de publication et mention de la délivrance du brevet: **12.07.1995**
(21) Numéro de dépôt: 90400993.3
(22) Date de dépôt: 11.04.1990
(51) Int. Cl.: B25J 5/00, B25J 19/00, B25J 13/08, B25J 9/04

(54) **Engin de télémanipulation prévu pour être suspendu à une unité de levage**
Telemanipulator, vorgesehen zum Aufhängen an einem Hebezeug
Telemanipulator provided for being suspended from a hoisting unit

(30) Priorité: 13.04.1989 FR 8904912
(43) Date de publication de la demande: 17.10.1990
(73) Titulaire: SOCIETE D'INNOVATIONS TECHNIQUES, SIT, F-86100 Chatellerault (FR)
(72) Inventeur: Garnier, André, F-86200 Loudun (FR)
(74) Mandataire: Poulin, Gérard

(56) Documents cités:
- CH-A- 370 168
- FR-A- 1 246 296
- FR-A- 2 550 984
- FR-E- 86 927
- GB-A- 2 212 538
- US-A- 2 344 108
- PATENT ABSTRACTS OF JAPAN vol. 9, no. 304 (P-409)(2027) 30 Novembre 1985& JP-A-60 138 458 (MITSUBISHI ) 23 Juillet 1985

## Description

L'invention concerne un engin de télémanipulation autonome conçu de façon à pouvoir être utilisé en association avec une unité de levage telle qu'un pont roulant disponible à l'intérieur d'une cellule de confinement.

Dans l'industrie nucléaire, la nécessité de manipuler à distance des produits radioactifs placés dans des cellules de confinement a conduit les constructeurs à développer de nombreux dispositifs de télémanipulation. Ces dispositifs de télémanipulation sont généralement classés en deux familles constituées par les télémanipulateurs de précision, et par les télémanipulateurs lourds.

Dans la famille des télémanipulateurs de précision, on trouve tous les télémanipulateurs comprenant un bras maître situé à l'extérieur de la cellule de confinement et un bras esclave situé à poste fixe à l'intérieur de la cellule et reproduisant les mouvements du bras maître. Les télémanipulateurs maître-esclave (document FR-E-86 927) avec ou sans retour d'effort appartiennent à cette catégorie.

Les télémanipulateurs lourds sont au contraire des engins autonomes qui comprennent une colonne support verticale télescopique faisant saillie vers le bas à partir d'un chariot apte à se déplacer selon deux directions horizontales perpendiculaires entre elles, cette colonne support portant à son extrémité inférieure au moins un bras de préhension muni d'une pince et généralement formée d'au moins deux segments articulés entre eux (figure 11 du document CH-A-370 168).

Les télémanipulateurs lourds sont des engins spécialisés complexes et onéreux. De plus, les concepteurs de ces engins les dotent souvent d'une relative précision qui est fréquemment inadaptée aux tâches relativement simples qu'ils sont généralement destinés à remplir à l'intérieur des cellules de confinement et qui sont par exemple la préhension d'un objet et son transport d'un point à un autre à l'intérieur de la cellule.

Le caractère très spécialisé des télémanipulateurs lourds, leur coût élevé et leur encombrement important fait que les utilisateurs hésitent parfois à décider de l'implantation d'un tel télémanipulateur dans une cellule de confinement.

Par ailleurs, on connaît du document "Patent Abstracts of Japan", vol. 9, n° 304 (P-409) (2027) du 30.11.85 et du document JP-A-60 138 458 un engin submersible autonome, pour le contrôle ou la réparation en eau des cuves de réacteurs nucléaires, l'engin étant doté de propulseurs et relié par un câble à une station de surface. Cet engin comprend un support sur lequel est monté un bras articulé permettant de maintenir une sonde ou un outil en un emplacement fixe dans l'espace, malgré des changements d'attitude possibles du support. Une masse d'équilibrage, également reliée au support par un bras articulé, permet de faire varier le centre de gravité et le centre de flottaison de l'engin et, éventuellement, de contrôler son attitude.

On connaît aussi du document FR-A-2 550 984 un support de robot conforme au préambule de la revendication 1 apte à être déplacé d'une zone de travail à une autre au moyen d'un pont roulant.

L'invention a précisément pour objet un nouvel engin de télémanipulation conçu de façon à pouvoir être suspendu à une unité de levage quelconque tel qu'un pont roulant déjà présent à l'intérieur d'une cellule de confinement, de façon à pouvoir accomplir les tâches qui sont généralement demandées aux télémanipulateurs lourds, sans nécessiter un investissement important et sans pénaliser pour autant l'espace disponible à l'intérieur de la cellule.

Selon l'invention, ce résultat est obtenu au moyen d'un engin de télémanipulation conforme à la revendication 1.

Un engin de télémanipulation ainsi conçu peut être suspendu à une unité de levage quelconque présente dans une cellule de confinement, lorsque son utilisation est requise. Dès que l'on n'a plus besoin de l'engin de télémanipulation, celui-ci peut être rangé dans un coin de la cellule, ce qui libère l'espace disponible à l'intérieur de celle-ci. Il est à noter que la grande simplicité de cet engin fait que son prix est particulièrement bas par comparaison avec celui d'un télémanipulateur lourd de conception classique, ce qui constitue, par rapport à un tel télémanipulateur, un atout supplémentaire appréciable. En outre, il est important de noter que malgré sa simplicité, l'engin de télémanipulation selon l'invention fonctionne de façon particulièrement sûre grâce à l'équilibrage automatique du bras réalisé par le contrepoids, que ce soit à vide ou lorsqu'une charge est portée par le bras de préhension, y compris lorsqu'un effort est supporté par ce dernier.

Dans ce même mode de réalisation, le premier et le deuxième moyens de commande d'orientation sont des motoréducteurs montés sur le support.

Avantageusement, un potentiomètre est associé à chacun des moyens de commande d'orientation. Cela permet notamment, en connaissant l'orientation du bras par rapport au support, d'effectuer automatiquement l'équilibrage de ce dernier avant la dépose d'une charge, ce qui évite alors tout risque d'oscillation de l'engin par rapport à l'unité de levage auquel il est suspendu.

Le support peut notamment être réalisé en deux parties disposant entre elles d'un degré de liberté de rotation autour d'un axe perpendiculaire à l'axe d'articulation du bras de préhension et prévu pour être orienté verticalement. Le mouvement de rotation correspondant est alors commandé par un moyen de commande approprié monté dans le support.

Un mode de réalisation préféré de l'invention va à présent être décrit, à titre d'exemple nullement limitatif en se référant aux dessins annexés, dans lesquels :
- la figure 1 est une vue en perspective représentant de façon schématique l'implantation d'un engin de télémanipulation conforme à un mode de réalisation de l'invention à l'intérieur d'une cellule de confinement ;
- la figure 2 est une vue de côté de l'engin de télémanipulation selon un mode de réalisation de l'invention ; et
- la figure 3 est une vue de dessus de l'engin de télémanipulation de la figure 2.

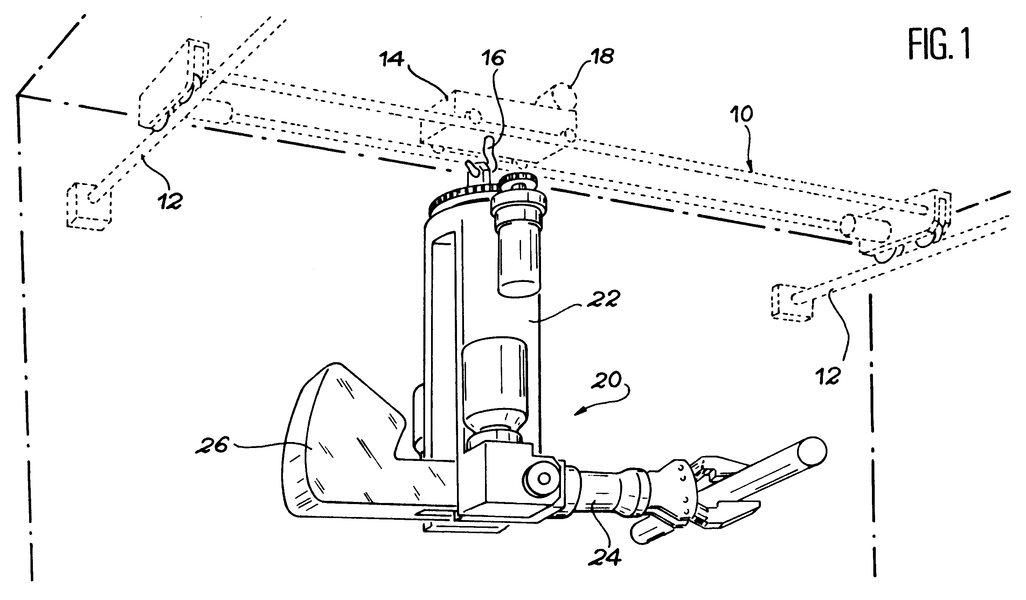

Sur la figure 1, on a représenté une partie d'une cellule de confinement d'une installation nucléaire. Une telle cellule est habituellement équipée d'une unité de levage constituée par un pont roulant 10 représenté en trait interrompu sur la figure 1, mais qui peut dans certain cas être de nature différente.

De la façon habituelle, le pont roulant 10 peut se déplacer selon une première direction horizontale sur des rails 12 et il supporte un chariot 14 apte à se déplacer sur le pont 10 selon une direction horizontale perpendiculaire à la direction définie par les rails 12. Le chariot 14 supporte un crochet de levage 16 par l'intermédiaire d'un câble (non représenté) pouvant être enroulé ou déroulé à volonté sur un treuil 18 supporté par le chariot.

Conformément à l'invention, il est proposé un engin de télémanipulation 20 qui est stocké à demeure à l'intérieur de la cellule de confinement, de façon à pouvoir être suspendu au crochet 16 du pont roulant lorsqu'on désire effectuer à l'intérieur de la cellule une tache comparable à celle qui pourrait être réalisée par un télémanipulateur lourd.

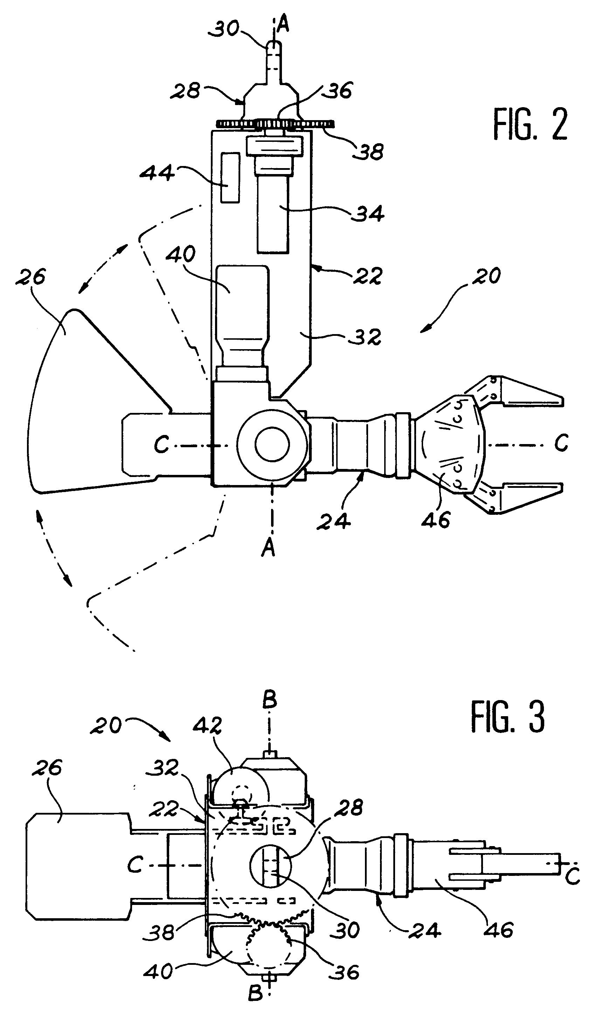

L'engin de télémanipulation 20, qui va être décrit plus en détail en se référant aux figures 2 et 3, se compose principalement d'un support 22 apte à être suspendu au crochet 16, d'un bras de préhension 24 et d'un contrepoids d'équilibrage 26, tous deux articulés autour d'un même axe sur le support 22.

Le support 22 comporte une partie supérieure 28 équipée à son extrémité haute d'un anneau de préhension 30 dans lequel peut pénétrer le crochet 16 du pont roulant.

Le support 22 comprend de plus une partie inférieure 32 présentant approximativement la forme d'un U renversé, de façon à former une chape. Cette partie inférieure 32 du support 22 dispose d'un degré de liberté de rotation autour d'un axe AA par rapport à la partie supérieure 28, l'axe AA étant prévu pour être orienté verticalement lorsque le bras de préhension 24 est équilibré par le contrepoids 26, comme l'illustrent les figures.

La partie inférieure 32 du support 22 porte, en haut de l'une des branches latérales du U renversé formé par cette partie 32, un motoréducteur 34. L'arbre de sortie supérieure du motoréducteur 34, d'axe parallèle à l'axe AA, porte un pignon 36 qui s'engrène sur une roue dentée 38 centrée sur l'axe AA et fixée sur la partie supérieure 28 du support 22.

La partie inférieure 32, en forme de U renversé, du support 22 forme une chape à l'extrémité inférieure de laquelle sont articulés, autour d'un axe BB perpendiculaire à l'axe AA, le bras de préhension 24 et le contrepoids d'équilibrage 26. Le bras de préhension 24 et le contrepoids d'équilibrage 26 peuvent cependant pivoter indépendamment l'un de l'autre autour de cet axe BB. L'évidement formé à l'intérieur de U formé par la partie 32, ainsi que le contrepoids 26, sont dimensionnés de telle sorte que ce dernier puisse pivoter librement à l'intérieur de la partie 32, comme on l'a représenté en traits mixtes sur la figure 2.

L'une des branches du U renversé formé par la partie inférieure 32 du support 22 porte, à proximité de cet axe BB, un ensemble motoréducteur 40 dont l'arbre de sortie inférieur, orienté parallèlement à l'axe AA, commande le pivotement du bras de préhension 24 autour de l'axe BB, par l'intermédiaire d'un mécanisme de transmission tel qu'un ensemble de pignons (non représenté).

L'autre branche du U renversé formé par la partie inférieure 32 du support 22 porte, à proximité de l'axe BB, un autre ensemble motoréducteur 42. L'arbre de sortie inférieur de cet ensemble motoréducteur 42, également parallèle à l'axe AA, commande le pivotement du contrepoids d'équilibrage 26 autour de l'axe BB, par l'intermédiaire d'un mécanisme de transmission tel qu'un ensemble de pignons (non représenté).

Afin de permettre d'assurer un équilibrage automatique du bras de préhension 24 par le contrepoids 26 que ce soit à vide ou en charge, et en présence ou non d'un effort extérieur, le motoréducteur 42 commandant l'orientation du contrepoids 26 autour de l'axe BB est sensible à un signal délivré par des moyens 44 permettant de détecter une inclinaison ou basculement de l'ensemble de l'engin autour d'un axe parallèle à l'axe BB et passant par le crochet 30.

Ces moyens de détection 44 peuvent être réalisés de différentes manières. En particulier, ces moyens peuvent être sensibles à une inclinaison du support 22 par rapport à la verticale, pour ramener en permanence l'axe AA du support sur la verticale, en agissant sur le motoréducteur 42 commandant le pivotement du contrepoids 26 autour de l'axe BB.

Ainsi, les moyens de détection 44 peuvent comprendre, dans l'une des branches de la partie inférieure 32 en forme de U renversé du support 22, un dispositif du type pendule comportant une masse suspendue servant à déterminer la verticale et un potentiomètre sensible à la position angulaire relative de la masse suspendue par rapport à l'axe AA. Ce potentiomètre produit un signal représentatif de l'inclinaison du support 22 par rapport à la verticale, et ce signal est utilisé pour alimenter le motoréducteur 42, de telle sorte que ce dernier est actionné automatiquement jusqu'à ce que l'axe AA redevienne vertical. Le déplacement angulaire du contrepoids 26 commandé par le motoréducteur 42 est contrôlé par un potentiomètre (non représenté).

Les moyens de détection 44 peuvent également comprendre un niveau à contact, par exemple du type à mercure, ou des jauges de contrainte placées entre les parties supérieure 28 et inférieure 32 du support 22.

De préférence, un potentiomètre (non représenté) est également être associé à l'ensemble motoréducteur 40, pour mesurer la position angulaire du bras de préhension 24 autour de l'axe BB. La connaissance de la position angulaire du bras 24 permet, juste avant la dépose d'une charge portée par ce bras, d'en assurer l'équilibrage à vide à l'aide du contrepoids 26 sans risque de basculement intempestif de l'engin au moment où la charge est lachée.

Dans l'exemple de réalisation illustré sur les figures, le bras de préhension 24 comporte une pince de préhension 46 disposant d'un mouvement de serrage et d'un degré de liberté de rotation autour de l'axe propre CC du bras 24, qui passe par le point d'intersection des axes AA et BB. Les motoréducteurs (non représentés) commandant ces deux mouvements sont placés à l'intérieur du bras 24.

Si nécessaire, le bras de préhension 24 peut être doté de degrés de liberté supplémentaires favorisant la réalisation de certaines tâches particulières.

Un système de cablage (non représenté) traversant la paroi de la cellule de confinement relie chacun des motoréducteurs 34 et 40 ainsi que les motoréducteurs commandant les mouvements de serrage et de pivotement de la pince 46 à un système de commande placé à l'extérieur de la cellule.

Un élément dynamométrique de sécurité (non représenté) est incorporé dans la partie supérieure 28 du support 22, afin d'harmoniser la force de l'engin de télémanipulation à la capacité de l'unité de levage à laquelle il est suspendu.

En outre, les différents motoréducteurs 34, 40 et 42 sont interchangeables au moyen d'un télémanipulateur.

Bien entendu, l'invention n'est pas limitée au mode de réalisation qui vient d'être décrit à titre d'exemple, mais en couvre toutes les variantes. Ainsi, à la place du contrepoids d'équilibrage unique décrit, l'engin de télémanipulation selon l'invention peut comprendre un ensemble de deux contrepoids d'équilibrage. Par ailleurs, le degré de liberté de rotation de la partie inférieure 32 du support 22 autour de l'axe AA peut être supprimé et le bras de préhension 24 peut disposer de degrés de liberté différents de ceux qui ont été décrits.

## Revendications

1. Engin de télémanipulation apte à être suspendu à une unité de levage, caractérisé par le fait qu'il comprend un support (22) sur lequel sont directement articulés, autour d'un même axe (BB), un bras de préhension (24) et au moins un contrepoids (26) d'équilibrage de ce bras ; un premier moyen de commande d'orientation (40) du bras de préhension autour dudit axe (BB) par rapport au support ; un deuxième moyen de commande d'orientation (42) du contrepoids autour dudit axe (BB) par rapport au support ; et un moyen de détection (44) d'une inclinaison du support par rapport à la verticale, agissant sur le deuxième moyen de commande d'orientation (42) afin d'annuler automatiquement cette inclinaison.

2. Engin de télémanipulation selon la revendication 1, caractérisé par le fait que le premier et le deuxième moyens de commande d'orientation sont des moto-réducteurs (40,42) montés sur ledit support (22).

3. Engin de télémanipulation selon l'une quelconque des revendication 1 et 2, caractérisé par le fait qu'un potentiomètre est associé à chacun des moyens de commande d'orientation (42,42).

4. Engin de télémanipulation selon l'une quelconque des revendications précédentes, caractérisé par le fait que ledit support (22) comporte une partie supérieure (28) apte à être accrochée à une unité de levage et une partie inférieure (32) portant le bras de préhension et le contrepoids et disposant d'un degré de liberté de rotation autour d'un axe (AA) perpendiculaire à l'axe d'articulation du bras de préhension et prévu pour être orienté verticalement, un troisième moyen de commande (34) étant prévu pour commander une rotation de ladite partie inférieure par rapport à la partie supérieure du support.

5. Engin de télémanipulation selon l'une quelconque des revendications précédentes, caractérisé par le fait que le bras de préhension (24) comporte une pince de préhension (46) disposant d'un degré de liberté de rotation autour d'un axe propre (CC) du bras, perpendiculaire à l'axe d'articulation de ce dernier sur le support, le bras de préhension comportant un quatrième moyen de commande de serrage de la pince et un cinquième moyen de commande d'un mouvement de rotation de la pince autour de l'axe propre (CC) du bras.

## Claims

1. Remote handling machine suitable for being suspended from a lifting unit, characterized in that it incorporates a support (22), on which are articulated about the same axis (BB) a gripping arm (24) and at least one counterweight (26) for balancing this arm; a first device (40) to control the orientation of the gripping arm about said axis (BB) with respect to the support; a second device (42) to control the orientation of the counterweight with respect to said axis (BB) of the support; and a device (44) to detect any slanting of the support with respect to the vertical acting on the second orientation control device (42) so as to automatically cancel out this slanting.

2. Remote handling machine according to claim 1, characterized in that the first and second orientation control means are back-geared motors (40, 42) mounted on said support (22).

3. Remote handling machine according to either of the claims 1 and 2, characterized in that a potentiometer is connected to each of the orientation control means (42, 42).

4. Remote handling machine according to any one of the preceding claims, characterized in hat said support (22) comprises an upper section (28) suitable for being suspended from a lifting unit and a lower section (32) bearing the gripping arm and the counterweight and having a degree of freedom around an axis (AA) perpendicular to the hinge pin of the gripping arm and provided so as to be orientated vertically, a third control device (34) being provided so as to control a rotation of said lower section with respect to the upper section of the support.

5. Remote handling machine according to any one of the preceding claims, characterized in that the gripping arm (24) comprises gripping pliers (46) having a degree of freedom of rotation around an actual axis (CC) of the arm perpendicular to the hinge pin of the latter on the support, the gripping arm comprising a fourth device to control clamping of the pliers and a fifth device to control a movement of rotation of the pliers around the actual axis (CC) of the arm.

## Patentansprüche

1. Telemanipulationsmaschine, die an einem Hängezeug aufgehängt werden kann, **dadurch gekennzeichnet**, daß sie einen Träger (22) aufweist, auf dem um dieselbe Achse (BB) ein Greifarm (24) und mindestens ein Gegengewicht (26) zum Ausgleich dieses Arms unmittelbar verschwenkbar sind; eine erste Steuereinrichtung (40) zur Orientierung des Greifarms um die Achse (BB) bezüglich dem Träger; eine zweite Steuereinrichtung (42) zur Orientierung des Gegengewichts um die Achse (BB) bezüglich dem Träger; und eine Meßeinrichtung (44) für die Neigung des Trägers bezüglich der Vertikalen, die auf die zweite Orientierungssteuereinrichtung (42) einwirkt, um diese Neigung automatisch aufzuheben.

2. Telemanipulationsmaschine gemäß Anspruch 1, **dadurch gekennzeichnet**, daß die erste und die zweite Orientierungssteuereinrichtung Getriebemotoren (40, 42) sind, die auf dem Träger (22) befestigt sind.

3. Telemanipulationsmaschine gemäß einem der Ansprüche 1 und 2, **dadurch gekennzeichnet**, daß ein Potentiometer an jede der Orientierungssteuereinrichtungen (42, 42) angeschlossen ist.

4. Telemanipulationsmaschine gemäß einem der vorstehenden Ansprüche, **dadurch gekennzeichnet**, daß der Träger (22) einen oberen Abschnitt (28) besitzt, der an ein Hebezeug angehängt werden kann, und einen unteren Abschnitt (32), der den Greifarm und das Gegengewicht trägt und der über einen Rotationsfreiheitsgrad um eine Achse (AA) verfügt, die senkrecht zur Schwenkachse des Greifarms ist und die vorgesehen ist, vertikal orientiert zu werden, wobei eine dritte Steuereinrichtung (34) zur Steuerung einer Drehung des unteren Abschnitts in Bezug auf den oberen Abschnitt des Trägers vorgesehen ist.

5. Telemanipulationsmaschine gemäß einem der voranstehenden Ansprüche, **dadurch gekennzeichnet**, daß der Greifarm (24) eine Greifklemme (46) besitzt, die über einen Rotationsfreiheitsgrad um eine eigene Achse (CC) des Arms, die senkrecht zur Schwenkachse des letzteren auf dem Träger ist, verfügt, wobei der Greifarm eine vierte Steuereinrichtung zum Spannen der Klemme und eine fünfte Steuereinrichtung zur Drehbewegung der Klemme um die eigene Achse (CC) des Arms besitzt.
